# EUROPEAN PATENT SPECIFICATION

(11) **EP 3 302 078 B1**
(45) Date of publication and mention of the grant of the patent: **01.05.2019**
(21) Application number: 16744565.9
(22) Date of filing: 27.05.2016
(51) Int. Cl.: A23C 19/16, C09D 167/04

(54) **CHEESE COATING**
KÄSEÜBERZUG
ENROBAGE DE FROMAGE

(30) Priority: 27.05.2015 NL 2014862
(43) Date of publication of application: 11.04.2018
(73) Proprietor: CSK Food Enrichment BV, 8938 AS Leeuwarden (NL)
(72) Inventor: MEIJER, Willem Cornelis, 6721 AM Bennekom (NL); KOOPMANS, Wieger Jan, 8911 ET Leeuwarden (NL); KEVELAM, Jan, 6711 JL Ede (NL); NURMI, Leena, FI-02270 Espoo (FI)
(74) Representative: Nederlandsch Octrooibureau
(86) International application number: PCT/NL2016/050379
(87) International publication number: WO 2016/190741

(56) References cited:
- EP-A1- 2 543 246
- WO-A1-98/29477
- WO-A2-02/34857
- JP-A- H0 978 494
- JP-A- 2003 321 600
- DATABASE WPI Week 201515 Thomson Scientific, London, GB; AN 2015-149074 XP002751946, & JP 2015 010155 A (FUJITSU LTD) 19 January 2015 (2015-01-19)
- DATABASE WPI Week 201153 Thomson Scientific, London, GB; AN 2011-J81713 XP002751947, & JP 2011 148888 A (SANYO CHEM IND LTD) 4 August 2011 (2011-08-04) & JP 2011 148888 A (SANYO CHEM IND LTD) 4 August 2011 (2011-08-04)

## Description

The present invention is in the field of the cheese manufacture industry, and relates to an improved method for coating a cheese, as well as the corresponding coating compositions, use thereof for coating cheese and the coated cheeses.

### Background

The use of a polymer emulsion for the coating of young cheeses is known. Such coating provides protection to the cheese during ripening, inter alia from mould formation, and at the same time prevents rapid drying of the cheese by excessive evaporation of water from the cheese. Cheese coatings are generally applied by treatment of a cheese with the polymer emulsion and subsequent drying of the polymer emulsion, which generates a protective film. In order to be suitable as cheese coating composition, the polymer emulsion needs to have a sufficiently low viscosity, to enable easy application thereof on the surface of the cheese, but at the same time a sufficiently high viscosity that the applied layer of the emulsion remains sufficiently on the cheese whilst it is allowed to dry. Furthermore, the emulsion requires excellent film forming properties, such that an appropriate film is formed on the surface of the cheese.

In the art, emulsions of polyvinyl acetate copolymers, such as dibutyl maleatevinyl acetate (VA-DBM) or ethylene-vinyl acetate (EVA) copolymers, are the most commonly used in cheese coating compositions. Some authors have suggested to use polylactic acid in cheese coating compositions, e.g. in EP 2 543 246, WO 2010/106274 and WO 2002/034857, but none have actually prepared such coating compositions. EP 246 relates to water-borne cheese coating compositions comprising one or more film forming agents selected from the group of an emulsion polymer and a biopolymer dispersion and further comprises viable lactic acid bacteria. Suitable biopolymer dispersions for water-borne cheese coating compositions include poly(hydroxy alkanoate), at least partially denatured proteins, in particular globular proteins and polylactic acid. No details are given of the polylactic acid, nor have actual lactic acid dispersion been prepared in EP 246.

Aqueous dispersions of polylactic acid are known outside the field of cheese coatings, such as from EP 1302502, US 2007/0088099, US 2011/0237710, WO 98/29477, WO 2011/024021, EP 1849833, JP 2015010155, JP H0978494, JP 2003321600, JP 2011148888, JP 2006089687, JP 200407413 and JP 2004323640. The present inventors have for the first time attempted to prepare such polylactic acid-based cheese coating compositions, and have overcome one or more difficulties associated therewith.

### Summary of the invention

The invention relates to an improved method for coating a cheese, wherein a coating composition comprising polylactic acid having a number-averaged molecular weight (*M*ₙ) of at most 50000 g/mol, is applied to a surface of the cheese. The invention also relates to the corresponding coating composition, use thereof for coating cheese and the coated cheeses. More specifically, the invention relates in a first aspect to a method for coating a cheese, comprising applying an aqueous coating composition to the surface of a cheese, wherein the coating composition comprises at least 5 wt% polylactic acid dispersed in an aqueous phase, and optionally a plasticizer, wherein the polylactic acid has a number-averaged molecular weight (*M*ₙ) of at most 50000 g/mol. In a further aspect, the invention relates to a coated cheese obtainable by said method. In a further aspect, the invention relates to a food coating composition, comprising at least 5 wt% polylactic acid dispersed in an aqueous phase, protective colloids and optionally a plasticizer, which further comprises a colorant, and which does not contain any filler, and which does not contain polyester urethane having an Mₙ of 10⁵, wherein the polylactic acid has a number-averaged molecular weight (*M*ₙ) of at most 50000 g/mol. In a further aspect, the invention relates to the use of a coating composition comprising at least 5 wt% polylactic acid dispersed in an aqueous phase, protective colloids and optionally a plasticizer, wherein the polylactic acid has a number-averaged molecular weight (*M*ₙ) of at most 50000 g/mol for coating of cheese.

Although it has been suggested in the art to include polylactic acid in cheese coating compositions, none of these disclosures describe an actual cheese coating composition comprising polylactic acid. The present inventors now surprisingly found that including low molecular weight polylactic acid, i.e. having a number-averaged molecular weight (*M*ₙ) of at most 50000 g/mol, provides coating compositions with superior properties compared to polylactic acid having a greater *M*ₙ. This is even more surprising given the fact that (acrylic) emulsion polymers for coatings typically have a molecular weight of above 100000 g/mol.

The present invention not only provides polylactic acid-based cheese coatings for the first time, but these coating compositions are a major improvement over prior art cheese coating compositions. First of all, polylactic acid is prepared from lactic acid, which may originate from milk, just as the remainder of the cheese, while widely-used poly(vinyl acetate) copolymers (PVA) are petrochemical-based. The present invention thus provides a potentially renewable and/or more environmentally friendly coating composition compared to prior art PVA-based coating compositions. Especially the use of polylactic acid provides an interesting development, since now for the first time, it is possible to prepare an entire cheese, including the coating, from milk, milk ingredients and/or milk-derived products. As a further advantage, polylactic acid may provide the coating with an intrinsic protection against microbial spoilage, especially bacterial or fungicidal spoilage, or intrinsic preservation property. Upon storage, the polylactic acid will slowly hydrolyse and eventually release lactic acid which is a known food grade antimicrobial. The growth of unwanted microorganisms on the cheese coating during ripening and storage of the cheese can be reduced when the coating composition according to the present invention is used to coat the cheese, preferably without the need of including antimicrobial agents in the coating composition. Especially the presence of protective colloids, typically polyvinyl alcohol colloids, which may act as a carbon source for unwanted microorganisms, in the coating composition according to the invention may lead to microbial spoilage of the cheese. Furthermore, the cheeses coated with the coating composition according to the present invention are generally better protected against undesirable drying of the cheese during ripening and/or storage, compared to commercially available polyvinyl alcohol-stabilised vinyl acetate based emulsion copolymers.

### Detailed description

The present invention relates to an improved method for coating a cheese, using a coating composition comprising polylactic acid, as well as to the coating composition per se and to the use thereof for the coating of cheese.

### Method for coating a cheese

In one aspect the invention concerns a method for coating a cheese, characterised in that the coating composition according to the invention is used. The coating composition to be used in the method according to the invention comprises at least 5 wt% polylactic acid and optionally a plasticizer, wherein the polylactic acid has a number-averaged molecular weight (*M*ₙ) of at most 50000 g/mol. The coating composition preferably further comprises protective colloids. Thus in one embodiment, the present invention concerns a method for coating a cheese, comprising applying a coating composition to a surface of a cheese, wherein the coating composition comprises at least 5 wt% polylactic acid and optionally a plasticizer, wherein the polylactic acid has a number-averaged molecular weight (*M*ₙ) of at most 50000 g/mol. The coating composition according to the invention is defined further below. The cheese to be coated in the method according to the invention is preferably a hard or semi-hard cheese, more preferably selected from the group consisting of Gouda, Edam, Maasdam, Tilsit, Emmental, Gruyère and Parmesan.

Typically, the cheese to be subjected to the method according to the invention is green cheese, i.e. the coating is applied after manufacture of the cheese but prior to ripening thereof. Manufacture of green cheese is common in the art and usually involves coagulating casein proteins from a cheese precursor, usually milk or cheese milk, to obtain curd, and then cutting, draining, scalding, pressing, shaping and salting the curd, to obtain green cheese. In one embodiment, the method according to the invention includes the manufacture of green cheese from the cheese precursor. The method according to the invention thus preferably comprises coagulating casein proteins from a cheese precursor, usually milk or cheese milk, to obtain curd, and then cutting, draining, scalding, pressing, shaping and salting the curd, to obtain green cheese, and subsequently applying the coating composition according to the invention to the green cheese.

The method of coating a cheese involves applying the coating composition to a surface of the cheese. Although it is preferred that the entire surface of the cheese is coated in the method according to the invention, the invention also encompasses partial coating of the cheese surface. It is also possible to coat different parts of the cheese at different moments, to eventually coat the entire cheese surface, e.g. first one half and after a drying period the second half, as explained further below.

It is preferred that the coated cheese is subsequently dried. The application of coating compositions and subsequent drying is known in the art, and may be performed by any means known in the art. Drying is conveniently combined with ripening of the cheese. During ripening, the cheese is stored for a certain period of time, typically at least 24 days and up to 3 months or more, such as up to 6 months, up to 1 year or even up to 2 years. During ripening, the cheese is often stored in an environment with controlled temperature and relative humidity. The duration of the ripening, the optimal temperature and relative humidity may vary between the different types of cheese, as known by the skilled person. As common in the art, the drying of the coated cheese is conveniently performed at the optimum conditions for ripening, as such integrating the drying with the ripening. Drying and ripening may preferably occur at a temperature of 0 - 25 °C, such as "cold ripening" at a temperature of 0 - 15 °C, preferably 10 - 15 °C, or "heated ripening" at a temperature of 15 - 25 °C, preferably 17 - 23 °C. During drying, the relative humidity is preferably 60 - 99 %, more preferably 75 - 95 %, most preferably 80 - 90 %. The drying/ripening of the cheese may comprise varying conditions. During the ripening period, the coating composition according to the invention may be applied multiple times onto the surface of the cheese. In one embodiment, the exposed surface (upper half) of the cheese is coated with the coating composition according to the invention, after which the coating composition is allowed to dry, preferably for a period for 12 h - 2 weeks, more preferably 24 h - 1 week. After the drying period, the cheese is turned and the then exposed and yet uncoated part of the cheese is subsequently coated and allowed to dry. This sequence of steps is repeated until the cheese has reached its desired age, preferably of at least 24 days, more preferably at least 4 weeks, and preferably up to 2 years, more preferably up to 1 year. During the ripening period, a cheese may receive 2 - 48 half-sided treatments, preferably 5 - 36 treatments, most preferably 8 - 24 treatments.

### Coating composition

In one aspect, the present invention concerns a coating composition. In the context of the present invention, the term 'coating composition' means a food coating composition. In a preferred embodiment, the present coating composition is a food coating composition that preferably is selected from the group consisting of a nut coating composition, a fruit coating composition, a sausage coating composition and a cheese coating composition. In one embodiment, the coating composition is a composition suitable for coating food, preferably a composition suitabe for coating one or more selected from the group consisting of nuts, fruit, sausage and cheese. In one embodiment, the coating composition is a composition suitable for coating cheese. In one embodiment, the coating composition is a cheese coating composition. The coating composition may also be referred to as a cheese coating composition. The coating composition according to the invention is preferably to be used in the method according to the invention. The invention also relates to the coating composition *per se,* and to the use of the coating composition according to the invention for coating a food product, preferably a cheese, more preferably a green cheese. Wherever "cheese coating composition" or "coating composition" is mentioned, this also refers to the coating composition to be applied in the method according to the invention. The coating composition according to the invention typically comprises (a) at least 5 wt% polylactic acid having a number-averaged molecular weight (*M*ₙ) of at most 50000 g/mol, (b) preferably protective colloids, and (c) optionally a plasticizer, dispersed in an aqueous phase. In one embodiment, the invention concerns a coating composition comprising: (a) at least 5 wt% polylactic acid having a number-averaged molecular weight (*M*ₙ) of at most 50000 g/mol, (b) protective colloids, and (c) optionally a plasticizer, dispersed in an aqueous phase. Herein, the coating composition may also be referred to as aqueous coating composition or aqueous cheese coating composition. The coating composition thus typically contains an aqueous phase containing water optionally with suitable additives as defined below dissolved or dispersed therein and polymeric material containing the polylactic acid and optionally further polymers and/or suitable additives as defined below.

The coating composition according to the invention comprises polylactic acid having a certain molecular weight distribution, wherein the average molecular weight of the polylactic acid is not too high. The molecular weight distribution of the polylactic acid according to the invention may be defined using the number-averaged molecular weight (*M*ₙ), the weight-averaged molecular weight (*M*_{w}) and/or by defining the amount of polylactic acid having a certain molecular weight (MW). Preferably, the molecular weight distribution is defined by at least the *M*ₙ, more preferably by both the *M*ₙ and the *M*_{w}. Thus, the coating composition according to the invention comprises polylactic acid having a number-averaged molecular weight (*M*ₙ) of at most 50000 g/mol, preferably at most 45000 g/mol, more preferably at most 30000 g/mol, most preferably at most 25000 g/mol or even at most 15000 g/mol. The *M*ₙ is typically at least 1000 g/mol, preferably at least 3000 g/mol, more preferably at least 5000 g/mol, most preferably at least 10000 g/mol. Thus, the *M*ₙ of the polylactic acid according to the invention is at most 50000 g/mol, preferably 1000 - 45000 g/mol, more preferably 3000 - 30000 g/mol, even more preferably 5000 - 25000 g/mol or even 10000 - 25000 g/mol, most preferably 10000 - 15000 g/mol. Additionally or alternatively, the weight-averaged molecular weight (*M*_{w}) of the polylactic acid is preferably at most 100000 g/mol, preferably 1000 - 75000 g/mol, more preferably 2000 - 50000 g/mol, most preferably 3000 - 40000 g/mol. Thus in one embodiment, the coating composition according to the invention comprises polylactic acid having a number-averaged molecular weight (*M*ₙ) of at most 50000 g/mol and a weight-averaged molecular weight (*M*_{w}) of at most 100000 g/mol. In one embodiment, the coating composition according to the invention comprises polylactic acid having a number-averaged molecular weight (*M*ₙ) in the range of 1000 - 45000 g/mol, more preferably 3000 - 30000 g/mol, even more preferably 5000 - 25000 g/mol and a weight-averaged molecular weight (*M*_{w}) in the range of 1000 - 75000 g/mol, more preferably 2000 - 50000 g/mol, most preferably 3000 - 40000 g/mol. The inventors surprisingly found that polylactic acid having such an *M*ₙ, and/or *M*_{w}, provide excellent properties to the coating composition, while polylactic acid with a greater *M*ₙ, and/or *M*_{w}, performs worse in this respect. In particular, the stability of the dispersions was negatively affected when polylactic acid having an *M*ₙ above 50000 g/mol was used, whilst the mechanical properties were surprisingly already acceptable at an *M*ₙ of less than 50000 g/mol. Even if a stable dispersion could be made from a polylactic acid having an *M*ₙ above 50000 g/mol, the resulting dispersion had poor film forming properties under typical cheese storage and/or ripening conditions.

Since the molecular weight of the lactic acid according to the invention is important, the polylactic acid fraction hereabove defined in terms of *M*ₙ, and/or M_{w}, could additionally or alternatively be defined as containing at least 60 wt%, preferably at least 75 wt%, more preferably at least 85 wt%, polylactic acid having a molecular weight (MW) of at most 100000 g/mol, preferably at most 50000 g/mol, more preferably 1000 - 50000 g/mol, most preferably 3000 - 50000 g/mol. Alternatively or additionally, the polylactic acid contains at least 30 wt%, preferably at least 50 wt%, polylactic acid having a MW of at most 30000 g/mol, more preferably in the range of 1000 - 30000 g/mol, most preferably 4000 - 30000 g/mol. Herein, *M*_{w} and *M*ₙ refer to the weight- and number-averaged molecular weights of the entire polylactic acid fraction comprised in the coating composition according to the invention, while MW refers to individual polymer molecules.

Values for *M*ₙ and *M*_{w} and the amount of a particular MW fraction can be routinely determined using size exclusion chromatography (SEC). In the context of the present invention, SEC experiments were performed in DMSO comprising 0.05 M LiBr as eluent at a rate of 0.5 ml/min and the results were calibrated against poly(methyl methacrylate) standards. The system was equipped with PSS GRAM 100 Å and PSS GRAM 3000 Å columns and a Waters 2414 Refractive Index Detector. The temperature of the columns was set at 30 °C. The results were interpreted by Waters Empower 2 software which converts the raw data from the refractive index detector (expressed as RI detector output (voltage) vs. time) to molecular weight distribution curves. The software calculates particularly the weight-normalized area of a slice [dwt/d(logM)] based upon the method described by Yaw and Fleming in "GPC Data Interpretation" in J. Appl. Polym. Sci., 1968, 12, 2111-2116. In case a polymer was insufficiently soluble in DMSO, tetrahydrofuran (THF) was used as alternative eluent. In case of THF as eluent, the system was equipped with Waters Styragel columns (HR4, HR3 and HR1) and the eluent was delivered at a rate of 0.6 ml/min. The temperature of the columns was set to 40 °C, and results were calculated with respect to polystyrene standards. In the context of the invention, values for *M*ₙ and *M*_{w}, and MW distributions are preferably obtained by SEC, more preferably by the above SEC protocol.

Without being bound to a theory, it is expected that increasing the molecular weight of the polylactic acid, preferably defined as an *M*ₙ above 50000 g/mol, increases the melting temperature thereof undesirably, such that the polymers are no longer readily dispersible in aqueous melt dispersion processes and stable coating compositions could not easily be prepared. In particular, the viscosity at the operation temperature should be sufficiently low to allow stirring of the polymer melt at the operation temperature, which conveniently is in the range of 50 to 170 °C, preferably 80 to 120 °C. Also, the film forming properties are negatively affected. Polylactic acid having an *M*ₙ above 50000 g/mol performed poorly in both dispersion formation and film formation. Thus, the polylactic acid preferably has such a melt temperature that stirring of the polymer melt, optionally in the presence of water, is possible at a temperature in the range of 50 to 170 °C, preferably 80 to 120 °C. Typically, the viscosity of a melt of the polylactic acid at the operation temperature, which conveniently is in the range of 50 to 170 °C, preferably 80 to 120 °C, should be at most 100 Pa·s, preferably in the range of 1 - 50 Pa·s (measured in a Brookfield viscometer at 20°C at a shear rate of 100 s⁻¹). In one embodiment, the melt temperature of the polylactic acid is at most 170 °C, more preferably 50 - 170 °C, most preferably 80 - 120 °C. Alternatively or preferably additionally, the polylactic acid - preferably in the presence of the plasticizer and other coating components (when present in the coating composition according to the invention) and excluding any water - preferably comprises a main glass transition temperature *T*_{g} in the range of -10 to 50 °C, more preferably 5 to 37 °C, even more preferably 10 to 25 °C, even more preferably 13 to 21 °C, most preferably 14 to 19 °C. Such values for the main *T*_{g} are optimal, since lower values have been found to lead to sticky or tacky coatings while higher values give brittle films. Polymers, especially amorphous polymers, having a main *T*_{g} of 14 - 19 °C, are especially suitable to make stable dispersions that are applicable to cheeses at industrial conditions (typically 10 - 13 °C and about 83 - 88 % relative humidity). In addition to a main *T*_{g}, the polylactic acid may have one or more secondary glass transition temperatures. The *T*_{g} is preferably determined using differential scanning calorimetry. The method for determining the main *T*_{g} of a polymer that is to be included in the coating composition according to the invention is disclosed in DIN 53765, version March 1994, with the following modification: the heating and cooling rates are set at 10 K/min instead of at 20 K/min and wherein the sample size ranges between 5 - 10 mg. The film is thoroughly dried, preferably at room temperature and over a desiccant, immediately before measuring the *T*_{g}*.*

In the context of the present invention, "polylactic acid" refers to a polymer that comprises lactic acid monomeric units. The polylactic acid may comprise D-lactic acid and/or L-lactic acid monomeric units, preferably the polylactic acid comprises D-lactic acid and L-lactic acid monomeric units. Polymers of both D-lactic acid and L-lactic acid as monomeric units are referred to as poly-(DL)-lactic acid. In a preferred embodiment, the molar ratio of D-lactic acid to L-lactic acid monomeric units in the polylactic acid is in the range of 80:20 - 20:80, preferably 70:30 - 30:70, more preferably 55:45 - 45:55, most preferably the molar ratio of D-lactic acid and L-lactic acid monomeric units in the polylactic acid is about 1. In one embodiment, the polylactic acid is not poly-L-lactic acid, poly-D-lactic acid or a mixture of poly-L-lactic acid and poly-D-lactic acid. Herein "poly-L-lactic acid" and "poly-D-lactic acid" refer to polylactic acid having respectively at least 90 mol% of L-lactic acid and at least 90 mol% of D-lactic acid as monomeric unit. Polylactic acid comprising substantially enantiomerically pure D-lactic acid or L-lactic acid as lactic acid monomeric unit give rise to crystalline brittle polymers which are more difficult to process, especially more difficult to disperse in an aqueous composition. Although such crystalline polymers may still be dispersible, this typically requires operation temperatures above the melting temperature of the polylactic acid. It is thus preferred in the context of the present invention that the polylactic acid is predominantly amorphous and thus more easily applicable in the coating compositions according to the invention. Predominantly amorphous polymers, especially those having a main *T*_{g} of 14 - 19 °C, are especially suitable to make stable dispersions that are applicable to cheeses at industrial conditions, such as for example at 10 - 13 °C and about 83 - 95 % relative humidity. The polylactic acid to be used in the coating composition according to the invention is preferably not terminally modified, i.e. the polylactic acid polymers contain at least one -COOH end group, or a salt thereof.

Further monomeric units, i.e. comonomers, may also be present in addition to lactic acid monomeric units within the polylactic acid. Likewise, the resulting polymer is preferably predominantly amorphous. Typically, the other monomeric units amount to at most 50 mol% of the monomeric units that together make up the polylactic acid, preferably at most 25 mol%, most preferably at most 10 mol% or even at most 5 wt%. Polylactic acid comprising more than 5 mol% of further monomeric units, in addition to lactic acid monomeric units, may also be referred to as "lactic acid copolymers". In an especially preferred embodiment, the polylactic acid contains almost exclusively lactic acid monomeric units, i.e. at least 95 mol%, preferably at least 96 mol% or even at least 97 mol%, most preferably about 100 mol% of the monomeric units are lactic acid monomeric units. Such polylactic acid containing almost exclusively lactic acid monomeric units may also be referred to as "lactic acid homopolymers". In case the polylactic acid is or comprises a lactic acid homopolymer, the coating composition containing said polylactic acid preferably further comprises a plasticizer. In case further monomeric units are present in the polylactic acid, these are typically selected from aliphatic hydroxycarboxylic acids, aliphatic diols, aliphatic dicarboxylic acids and mixtures thereof, preferably from aliphatic diols and/or an aliphatic dicarboxylic acids. The aliphatic diol preferably is a C₁₋₆ aliphatic diol, more preferably a C₂₋₄ aliphatic diol and most preferably selected from the group consisting of 1,2-ethanediol, 1,3-propanediol, 1,4-butanediol, 1,2-propanediol, 1,2-butanediol, 1,3-butanediol, 2,3-butanediol and mixtures thereof. The aliphatic dicarboxylic acid preferably is a C₄₋₁₂ aliphatic dicarboxylic acid, and more preferably selected from the group consisting of succinic acid, adipic acid, sebacic acid, azelaic acid, n-dodecanedioic acid and mixtures thereof. Coating compositions comprising such lactic acid copolymers do not require the presence of plasticizers and such coating compositions are thus preferably free of added although the presence of organic acids may be desired for other reasons. Thus, in one embodiment, the coating composition comprises a plasticizer in case the polylactic acid is a lactic acid homopolymer and the coating composition does not comprise an added plasticizer, optionally other than an organic acids, in case the polylactic acid is a lactic acid copolymer.

The polylactic acid may be prepared by any means known in the art. Polylactic acid is typically prepared by condensation polymerisation of lactic acid (polycondensation), optionally in the presence of comonomers, or by ring opening polymerisation of lactide. Preferably, the polylactic acid to be used in the coating composition according to the invention and the method according to the invention is obtainable by, preferably obtained by, condensation polymerisation of lactic acid. Polylactic acid prepared by condensation of lactic acid was found to even further improve the performance of the coating composition. Without being bound to a theory, it is expected that the polycondensation approach affords polylactic acid with a broader molecular weight distribution and often a lower *M*ₙ as compared with the ring opening approach, such that the lower molecular weight fraction of the polylactic acid formed via polycondensation acts as a plasticizer, thus reducing the *T*_{g} of the polylactic acid. Such a reduced *T*_{g} is expected to have a beneficial effect on the performance of the coating composition in terms of stability of the dispersion and/or applicability on cheese. In other words, as was surprisingly found, oligomers of lactic acid can effectively function as a plasticizer. In the context of this invention, an oligomer of lactic acid comprises 2 - 20 monomeric units of lactic acid. Thus, the polylactic acid is preferably obtained by or obtainable by polycondensation of D-lactic acid and of L-lactic acid, optionally in the presence of further comonomers, wherein the molar ratio of D-lactic acid to L-lactic acid monomeric units is in the range of 80:20 - 20:80, preferably 70:30 - 30:70, more preferably 55:45 - 45:55, most preferably the molar ratio is about 1. A further advantage of the polycondensation approach is that a higher amount of residual lactic acid may remain in the composition which is favourable in view of preservative properties.

Cheese coating compositions are typically dispersions of a polymeric material in water preferably further comprising suitable additives. Thus, the coating composition according to the invention preferably is a dispersion comprising an aqueous continuous phase and dispersed therein particles of a polymer, wherein at least part of the polymeric fraction of the coating composition according to the invention is polylactic acid as defined above, and wherein the dispersion preferably comprises suitable additives. Although it is preferred that the entire polymer fraction consists of polylactic acid, also amounts of further polymers may be present, e.g. at most 70 wt%, preferably at most 50 wt%, more preferably at most 35 wt%, even more preferably at most 25 wt% or most preferably at most 10 wt% of further polymers. In one embodiment, less than 50 wt.% of the polymer comprised by the composition according to the invention is a polyhydroxyalkanoate; more preferably, the composition according to the invention does not contain a polyhydroxyalkanoate. In one embodiment, the coating composition according to the invention comprises one or more further polymers selected from the group consisting of poly(vinyl ester) (co)polymer, poly(acrylate) (co)polymer and poly(methacrylate) (co)polymer, most preferably of poly(vinylester) (co)polymer. In particular, a coating composition may be advantageously provided as a mixture comprising 30 to 70 wt% of a poly(vinyl ester) (co)polymer and 70 to 30 wt% of a poly(lactic acid) as defined above, based on total weight of the polymeric material present in the coating composition.

The coating composition according to the invention typically comprises polylactic acid in such an amount that upon complete hydrolysis of the polymers the composition comprises at least 5 wt%, preferably 10 - 70 wt%, more preferably 20 - 60 wt%, most preferably 25 - 50 wt% of lactic acid, based on total weight of the composition. The skilled person appreciates how to determine the preferred amount of the polylactic acid, e.g. depending on the lactic acid content thereof. Preferably, the coating composition according to the invention typically comprises at least 5 wt%, preferably 10 - 70 wt%, more preferably 20 - 60 wt%, most preferably 25 - 50 wt% of polylactic acid, based on total weight of the composition.

The coating composition according to the invention may further comprise suitable additives. The term "suitable additives" refers to additives that are known in the art to be suitable in coating compositions, in particular in cheese coating compositions, and includes plasticizers, pH regulators, thickening aids, defoaming aids, dispersion aids or emulsifiers, colorants, preservatives, anti-oxidants. In a preferred embodiment, the coating composition according to the invention comprises one or more additive selected from plasticizers, pH regulators, thickening aids, defoaming aids, dispersion aids or emulsifiers, colorants, preservatives, anti-oxidants and mixtures thereof. It is especially preferred that the coating composition does not contain a wax in an amount exceeding the total polymer content comprised by the composition, or even more preferably, the coating composition does not contain a wax. In one embodiment, especially if the coating composition comprises lactic acid homopolymer, the coating composition according to the invention comprises a plasticizer. The coating composition according to the invention or the coating composition to be applied in the method according to the invention preferably comprises a plasticizer, more preferably 0.1 - 15 wt% plasticizer, relative to the weight of polylactic acid. The combined content of plasticizer and polylactic acid preferably amounts to 20 - 70 wt%. Thus in one embodiment, the coating composition according to the invention or the coating composition to be applied in the method according to the invention comprises 20 - 70 wt%, preferably 30 - 50 wt%, more preferably 35 - 45 wt% of the combined content of polylactic acid and plasticizer, relative to the total weight of the coating composition. In an especially preferred embodiment, the coating composition according to the invention consists of the polylactic acid as defined hereinabove, including lactic acid oligomers and monomers, dispersed in an aqueous phase and optionally one or more further polymers selected from the group consisting of poly(vinyl ester) (co)polymer, a poly(acrylate) (co)polymer and a poly(methacrylate) (co)polymer and optionally one or more of the suitable additives as defined herein.

The use of plasticizers in coating compositions, in particular in cheese coating compositions is known to depend on the characteristics of the polymer. The skilled person appreciates when to use plasticizers or not, depending on the *T*_{g} of the polymer and the characteristics of the coating composition. This is common practice for the skilled person in the field of cheese manufacture. Depending on the exact composition of the polylactic acid fraction, a plasticizer may or may not be required. For example, when the polylactic acid fraction comprises a substantial amount of small chain oligomers, hence oligomers comprising 2 - 20 monomeric units, the use of other plasticizer is not necessary, since these small molecules can act as plasticizers themselves. Also the use of plasticizers is usually not necessary if lactic acid copolymers are used. Alternatively, in case a relative small amount of oligomeric ("short chain") polylactic acid polymers is present in the polylactic acid fraction, the presence of a plasticizer may be desirable in order for the coating composition to have good film forming properties and/or to provide a suitable melt viscosity. Any plasticizer known in the art to be suitable in coating compositions, in particular in cheese coating compositions may be used, for example those mentioned in Commission Regulation (EU) No 10/2011 of 14 January 2011. The skilled person finds further guidance in US 2011/0237710, for selecting plasticizer that are compatible with polylactic acid.

Plasticizers that are especially suitable to be used in the coating composition according to the invention preferably are selected from small molecule plasticizers and polymeric plasticizers. Thus, in one embodiment, the coating composition according to the invention or the coating composition to be applied in the method according to the invention comprises a plasticizer selected from small molecule plasticizers and polymeric plasticizers. Small molecule plasticizers to be used in the coating composition according to the invention preferably are selected from, organic esters, such as preferably lactic esters, glycerol esters and citrate esters, and organic acids. In one embodiment, the coating composition according to the invention or the coating composition to be applied in the method according to the invention comprises a small molecule plasticizer selected from lactic esters, glycerol esters, citrate esters and organic acids. Suitable organic esters include esters of C₁-C₅ mono- or polyhydric aliphatic alcohols with aliphatic C₁-C₅ organic acids or aliphatic C₁-C₅ hydroxyacids. For clarity purposes, a C₁ alcohol means methanol, a C₁ organic acid means formic acid, etc. Furthermore, C₃ comprises n-propyl and i-propyl, C₄ comprises n-butyl, sec-butyl, i-butyl and tert-butyl; and C₅ comprises n-pentyl, sec-pentyl, tert-pentyl, isopentyl and neopentyl. Any hydroxyl group may further be present on the alkyl rests at any position. A C₃ hydroxyacid preferably relates to lactic acid. Lactic esters include oligomeric lactic acid, typically comprising 2 - 20 more preferably 3-10 monomeric units, as well as C₁-C₅ alkyl esters of lactic acid (e.g. methyl, ethyl, n-propyl or isopropyl esters of lactic acid). Glycerol esters include organic acid esters of glycerol, preferably C₁-C₅ organic acid esters of glycerol, more preferably an acetate ester of glycerol. Herein the glycerol ester may comprise a monoglyceride, a diglyceride or a triglyceride or a mixture thereof. The glycerol ester comprises preferably a monoglyceride.. Further preferred organic ester-type plasticizers are selected from triacetin (glycerine triacetate), acetem (acetic acid ester of monoglyceride, commercially available from Danisco) and Soft-n-Safe (acetic acid ester of castor oil monoglyceride, commercially available from Danisco). Organic acids are generally suitable as plasticizer, as they generally enhance antimicrobial properties of the coating composition. Suitable organic acids include C₁-C₅ organic acids, such as acetic acid, propionic acid and (iso)butyric acid. A specially preferred organic acid to be used as plasticizer is propionic acid because it enhances the antifungal properties of the coating composition. Mixtures of plasticizers may also be used in the coating composition according to the invention. A preferred mixture of plasticizers is a combination of a C₁-C₅ organic acid with any of the organic esters above, such as an ester of lactic acid, glycerol or citrate. Most preferably, an acetic acid ester of monoglyceride is used as plasticizer, optionally in combination with a C₁-C₅ organic acid such as propionic acid.

Polymeric plasticizers are polymers with a low *T*_{g}, which are capable of lowering the *T*_{g} of the polylactic acid that is applied according to the method according to the present invention and is comprised in the coating composition according to the present invention. An advantage of the use of polymeric plasticizers is that they do not substantially migrate into the cheese during drying/ripening thereof. Ethylene vinyl acetate copolymers (EVA) having a high vinyl acetate content are known to blend well with polylactic acid (see Ma et al., Eur. Polym. J. 2012, 48, 146-154), just as polyethylene adipate (PEA) (see Okamoto et al., Eur. Polym. J. 2009, 45, 2304-2312). Also polyethylene glycol or polypropylene glycol (PEG or PPG, respectively) are found to be suitable polymeric plasticizers for polylactic acid. Thus, the polymeric plasticizer is preferably selected from EVA, PEA, PEG and PPG, more preferably the polymeric plasticizer is EVA or PEA, most preferably EVA. In case the polymeric plasticizer is EVA, the vinyl acetate content is preferably in the range of 70 - 95 mol%, more preferably 75 - 93 mol%, most preferably 80 - 90 mol%.

In one embodiment, the coating composition according to the invention or the coating composition to be applied in the method according to the invention comprises one or more further components selected from protective colloids, emulsifiers, colorants, preservatives and anti-oxidants. In a preferred embodiment, the coating composition according to the invention or the coating composition to be applied in the method according to the invention further comprises a protective colloid. A protective colloid is also known as a dispersion aid, and facilitates the formation of the polymer dispersion in an emulsion polymerisation process. The protective colloid is preferably a water-soluble polymer, more preferably a water-soluble polymer of vinyl alcohol, of vinyl pyrrolidone, of ethylene glycol, or of propylene glycol, most preferably the protective colloid is a polyvinyl alcohol. It is preferred that the coating composition comprises a protective colloid, more preferably 1 - 30 wt%, even more preferably 3 - 20 wt%, most preferably 5 - 13 wt% of protective colloids, based on the total solid weight of the coating composition. In one embodiment, the coating composition according to the invention or the coating composition to be applied in the method according to the invention comprises an emulsifier. In one embodiment, the emulsifier preferably is a surfactant. In one embodiment the surfactant is selected from the group consisting of a metal C₅-C₂₅ alkyl sulphate (especially sodium dodecyl sulphate), an oleyl alcohol sulphate, and an oleyl alcohol ethoxylate. In one embodiment, the coating composition comprises at most one emulsifier as defined herein, typically the coating composition comprises one emulsifier.

The coating composition may further comprise colorants, preservatives and/or anti-oxidants. Preferably, the coating composition comprises a colorant, more preferably a colorant selected from carotene, annatto and mixtures thereof. Preferred preservatives to be used in the coating composition according to the invention include fungicides, even though the necessity therefore will be generally reduced as compared with conventional emulsion (co)polymer-based coating compositions, in view of the intrinsic preservative character of poly(lactic acid). Preferably, the coating composition comprises a preservative, more preferably a preservative selected form acetic acid or a salt thereof, propionic acid or a salt thereof, natamycin, or a mixture thereof. In this respect it is noted that organic acids may have the function of plasticizer and of preservative at the same time. Suitable anti-oxidants are known in the art and include ascorbic acid and tocopherol. Preferably, the total content of colorants, preservatives, plasticizers and/or anti-oxidants present in the coating composition is in the range of 0.1 - 5 wt%, based on the total weight of the coating composition.

The use of polylactic acid in the coating composition according to the invention or in the coating composition to be applied in the method according to the invention can provide an intrinsic preservative characteristic to the coating composition. Conventional coating compositions usually contain bacteriocins, or sources thereof, or fungicides or other components, such as lactic acid bacteria, that prevent the growth of pathogenic microorganisms including moulds, *Clostridia, Listeria.* Exemplary is the use of viable lactic acid bacteria, as disclosed in EP2543246. Without being bound to a theory, it is believed that the intrinsic preservative characteristic of the coating composition according to the invention may be associated with small amounts of monomeric lactic acid and/or oligomers thereof, and/or with the polylactic acid molecules themselves. The intrinsic preservative characteristic may reside in the carboxylic acid moieties (-COOH) which are present in monomeric lactic acid as well as in oligomers and polymers thereof (typically as end group). Such carboxylic acid groups are capable of dissociating into the conjugate base by release of a proton and may thus be considered to collectively form the undissociated lactic acid concentration within the coating composition. Thus, in one embodiment, the coating composition according to the invention, or the coating composition to be applied in the method according to the invention, does not comprise a bacteriocin or an added source of a bacteriocin. In another embodiment, the coating composition according to the invention, or the coating composition to be applied in the method according to the invention, does not comprise natamycin or a sorbate. In another embodiment, the coating composition according to the invention, or the coating composition to be applied in the method according to the invention, does not comprise an added source of lactic acid bacteria. In one embodiment, the coating composition comprises less than 10⁵ cfu lactic acid bacteria per g of coating composition, more preferably less than 10⁴ cfu/g, even more preferably less than 10³ cfu/g or even less than 10² cfu/g. In an especially preferred embodiment, the coating composition according to the invention does not comprise a bacteriocin or an added source of a bacteriocin, and does not comprise an added source of lactic acid bacteria.

Thus, in a preferred embodiment, the coating composition according to the invention comprises free carboxylic acid and/or free carboxylate groups, preferably free carboxylic acid groups, in a total concentration of 0.001 - 5 mol/l, preferably in a total concentration of 0.01 - 3 mol/l, more preferably in a total concentration of 0.05 - 1 mol/l, most preferably in a total concentration of 0.1 - 0.5 mol/l, wherein the concentration of free carboxylic acid groups or of free carboxylate groups, respectively, is typically determined using titration. In a yet more preferred embodiment, the coating composition according to the invention comprise lactic acid or salts thereof in a total concentration of 0.001 - 5 mol/l, preferably in a total concentration of 0.01 - 3 mol/l, more preferably in a total concentration of 0.05 - 1 mol/l, most preferably in a total concentration of 0.1 - 0.5 mol/l. Most preferably, the coating composition according to the invention or the coating composition to be applied in the method according to the invention comprises undissociated lactic acid (HLac) in a concentration of at least 0.01 mol/l, more preferably in a concentration of at least 0.05 mol/l. A typically concentration of undissociated lactic acid in the coating composition is in the range of 0.001 - 5 mol/l, preferably in a total concentration of 0.01 - 3 mol/l, more preferably in a total concentration of 0.05 - 1 mol/l, most preferably in a total concentration of 0.1 - 0.5 mol/l. K.A. Presser et al. (Applied and Environmental Microbiology, 1997, 63, 2355-2360) have found that a concentration of 10 mM of undissociated lactic acid can be enough to inhibit growth of *E. coli* even at pH > 4.5. The total concentration of lactic acid or salts thereof (i.e. undissociated and dissociated) was herein 0.025 mol/l or above. The pH of the coating composition according to the invention or the coating composition to be applied in the method according to the invention can be adjusted accordingly and is preferably in the range of 1.0 - 7.0, preferably 2.0 - 5.0. Accordingly, the coating composition may prevent the growth of undesired microorganisms during storage of the coating composition and/or during ripening of the cheese without the need of components specifically added for that reason.

The coating composition may also be referred to as "water-borne". The pH of the coating composition is preferably in the range of 1 - 7, more preferably 2.5 - 6.0, most preferably 4.0 - 5.0. The coating composition is generally acidic and may have a pH which is lower than desired, e.g. a pH in the range of 1 - 2. The skilled person will appreciate that a small amount of base, usually an aqueous NaOH solution, may be added to the dispersion in order to increase the pH to the desired level.

Two different embodiments of the coating composition are especially preferred. In one embodiment, the coating composition has a pH of between 1 and 4.5, more preferably of between 2.5 and 4.0 and the coating composition comprises less than 50 ppm or preferably no natamycin and furthermore comprises less than 500 ppm or preferably no sorbic acid or salts thereof. The coating composition preferably comprises a total concentration of lactic acid or salts thereof of 0.01 - 3 mol/l, more preferably a total concentration of 0.05 - 1 mol/l, most preferably a total concentration of 0.1 - 1 mol/l. The coating composition may optionally comprise propionic acid and/or acetic acid or salts thereof. Such a coating composition has excellent bacteriostatic properties against many pathogens such as *E. coli* during storage on account of its low pH and the presence of lactic acid. The low pH furthermore has an intrinsic fungicidal effect against many moulds and yeasts. The cheese coating is advantageously essentially free of the artificial fungicides sorbate and natamycin.

Another preferred coating composition has a pH of between 4.0 - 7, more preferably of between 4.5 - 6.5 and comprises natamycin, preferably at a concentration of 50 ppm or higher. Preferably the coating composition comprises a concentration of undissociated lactic acid or salts thereof of 0.01 - 3 mol/l, more preferably a concentration of 0.025 - 1 mol/l, most preferably a total concentration of 0.1 - 0.5 mol/l. The coating composition may optionally comprise propionic acid and/or acetic acid or salts thereof. This coating composition has acceptable storage stability on account of the presence of a minimum amount of undissociated lactic acid and has good fungicidal properties on the cheese.

For suitable application of the coating composition onto the cheese, it is preferred that the coating composition according to the invention has a Brookfield viscosity of at most 50000 mPa.s, more preferably at most 10000 mPa.s, most preferably at most 5000 mPa.s, wherein the Brookfield viscosity is determined according to ISO 2555. In this method, the viscosity of the coating composition is measured at 23 °C using a Brookfield viscometer type LVDV-E operated at speed 30 rpm using spindle number 4. The viscosity meter is levelled and the spindle is attached to the apparatus. The spindle is then immersed into the sample up to the mark on the spindle. The measurement is started and the result is taken at steady state or after one minute. Preferably, the Brookfield viscosity of the coating composition thus determined is in the range of 10 - 10000 mPa.s, more preferably in the range of 100 - 5000 mPa.s, most preferably in the range of 500 - 5000 mPa.s. It has been found that higher viscosities are more difficult to produce in melt dispersion processes without negatively affecting the stability of the coating compositions. Preferably, the coating composition has a Brookfield viscosity which is stable in time.

The total solid content of the coating composition according to the invention is preferably at least 5 wt%, preferably 20 - 70 wt%, more preferably 25 - 50 wt%, most preferably 33 - 48 wt%, based on total weight of the composition. In one embodiment, the total solid content is less than 40 wt%, typically less than 25 wt% or even less than 20 wt%. Herein, the total solid content is defined as the total weight of the composition minus the total weight of water. The total solid content is preferably determined at the time the coating composition is applied onto the cheese in the method according to the invention.

In one embodiment, the coating composition according to the invention does not contain kaolin or calcium, in particular it does not contain any filler. In the context of this embodiment, the filler is typically as defined in JPH0978494. In one embodiment, the coating composition according to the invention contains less than 1.5 wt%, more preferably less than 1 wt% rosin (or colophony), based on total weight of the polylactic acid. Most preferably, the coating composition contains no rosin. In one embodiment, the coating composition according to the invention contains less than 5 wt%, more preferably less than 2 wt%, most preferably no abietic acid, based on total weight of the polylactic acid. In one embodiment, the coating composition according to the invention does not contain 1 - 40 wt% of an ether-ester type plasticizer, based on weight of the polylactic acid. In the context of this embodiment, the ether-ester type plasticizer is typically as defined in JP 2011/148888. In one embodiment, the coating composition according to the invention contains less than 45 wt%, more preferably less than 25 wt%, more preferably less than 5 wt% polyester urethane having a *M*ₙ of 10⁵, based on total weight of the polylactic acid. Most preferably, the coating composition contains no polyester urethane having an *M*ₙ of 10⁵. In one embodiment, the coating composition according to the invention is not prepared by forming a mixture of the polylactic acid, plasticizer, dispersion aids and water, heating said mixture in order to obtain a paste-like composition and diluting said paste-like composition in water.

In one embodiment, the coating composition according to the invention does not contain both of (i) more than 0.015 wt%, preferably more than 0.01 wt% of an anionic emulsifier, based on total weight of the polylactic acid, and (ii) more than 25 wt%, preferably more than 10 wt% of a non-ionic emulsifier, based on total weight of the anionic emulsifier. Most preferably, the coating composition according to the invention does not contain both of an anionic emulsifier and a non-ionic emulsifier, or in other words, in case an anionic emulsifier is present preferably no non-ionic emulsifier is present and in case a non-ionic emulsifier is present preferably no anionic emulsifier is present. In the context of this embodiment, the terms "anionic emulsifier" and "non-ionic emulsifier" are typically interpreted as defined in JP 2004323640. In one embodiment, the coating composition according to the invention is not obtained by emulsifying the polylactic acid dissolved in organic solvent at a temperature of 0 - 60 °C in the presence of anionic emulsifier and non-ionic emulsifier. In the context of this embodiment, the terms "anionic emulsifier" and "non-ionic emulsifier" are typically interpreted as defined in JP 2004323640.

In one embodiment, the coating composition according to the invention does not contain both of (i) more than 0.8 wt%, preferably more than 0.5 wt% of a polyoxyethylene-polyoxypropylene block-copolymer group surfactant, and (ii) more than 4 wt%, preferably more than 3 wt% of an ammonia or an organic amine. In one embodiment, the coating composition according to the invention is not obtained using an organic solvent, typically no amphiphilic organic solvent such as tetrahydrofuran. In one embodiment, the coating composition according to the invention is not obtained by heating a raw material comprising polylactic acid, 1 - 30 wt% a polyoxyethylene-polyoxypropylene block-copolymer group surfactant, 5 - 30 wt% an ammonia or an organic amine, amphiphilic organic solvent and water and subsequently mixing the raw material with 1 - 50 wt% plasticizer and removing the amphiphilic organic solvent. Herein, the wt% values are based on the polylactic acid, and the amount of amphiphilic organic solvent is typically 5 - 40 wt%, based on total weight of polylactic acid, surfactant, amine, organic solvent, water and plasticizer. In one embodiment, the coating composition according to the invention does not contain polylactic acid having an *M*_{w} of 140000, a glass transition temperature of 57 - 59 °C, a softening point of 107 °C and a D-lactic acid content of 9.7 mol%.

In one embodiment, the coating composition according to the invention does not contain polylactic acid which is poly-L-lactic acid and/or poly-D-lactic acid. In one embodiment, the coating composition according to the invention does not contain two distinct organic solvents, typically not two distinct organic solvents having (i) limited solubility with respect to water and/or (ii) a boiling point of 100 °C or more.

The coating composition according to the invention or the coating composition to be applied in the method according to the invention, may be prepared according to any means known in the art. Suitably, the composition is prepared or obtainable by melt dispersion in the presence of protective colloids, suitably polyvinylalcohol, which act as dispersion aids. Melt dispersion typically occurs by mixing the polylactic acid, optionally a plasticizer and the protective colloids with water at a temperature that is sufficiently high to melt at least part of the polylactic acid. In one embodiment, the temperature applied at which melt dispersion is carried out does not exceed 150 °C, preferably not 140 °C. The dispersion obtained as such comprises the protective colloids, which thus end up in the coating composition of the invention. Even though these protective colloids are an excellent carbon source for unwanted microorganisms to grow on, the intrinsic preservative characteristic of the coating composition according to the invention may prevent the growth of unwanted microorganisms even when protective colloids are present therein. Nevertheless, it is advisable to store the dispersion at reduced temperature, typically below 15 °C and above freezing temperatures. The above process, also known as melt dispersion and also referred to as "aqueous melt dispersion", is known in the art e.g. from WO 98/029477. Alternatively, the polylactic acid may be dispersed in water in the presence of an emulsifier, preferably sodium dodecyl sulphate. Melt dispersion is preferred for the preparation of the coating composition according to the invention.

In a preferred embodiment, the coating composition is post-treated by applying shear forces, preferably using an Ultra-Turrax treatment, which is a known method in the art to reduce the particle size of dispersions, wherein the dispersion is vigorously agitated or stirred for a certain period of time. Ultra-Turrax post-treatment is preferably performed at a temperature of 50 - 100 °C and a duration of 1 - 30 min. Compositions containing small polylactic acid particles are advantageous for the coating composition according to the invention, since small particles reduce sedimentation of the polylactic acid, and thus increase the stability of the coating composition. It should be noted that some sedimentation during storage is not detrimental to the usability of the coating composition, as the sediment may be readily redispersed by agitating the composition (e.g. by shaking or stirring) prior to application to a surface of a cheese.

A further advantage of the coating composition according to the invention is that no aromatic hydrocarbons, aliphatic hydrocarbons and chlorinated solvents are needed for their preparation. It is thus preferred that no aromatic hydrocarbons, aliphatic hydrocarbons and chlorinated solvents are used in the preparation of the coating composition according to the invention. Likewise, it is preferred that the coating composition according to the invention or the coating composition to be applied in the method according to the invention is essentially free of aromatic hydrocarbons, aliphatic hydrocarbons and chlorinated solvents. In one embodiment according to the invention, the coating composition does not contain any organic solvent, preferably the coating composition does not comprise any other solvent than water.

### Coated cheese

The present invention also relates to a coated cheese obtainable by the method according to the invention, preferably obtained by the method according to the invention.

The coated cheese according to the invention is characterized by a coating of a dry film comprising polylactic acid as defined above for the coating composition. The dry film as obtained by the method according to the invention typically has a main *T*_{g} in the range of 5 - 37 °C, more preferably 10 - 25 °C, even more preferably 13 - 21 °C, most preferably 14 - 19 °C. The dry film may also exhibit a second *T*_{g}, preferably of 10 °C or lower, and/or of 37 °C or higher. The *T*_{g} (glass transition temperature) is preferably determined using differential scanning calorimetry. The method for determining the *T*_{g} of a polymer that is to be included in the coating composition according to the invention is disclosed in DIN 53765, version March 1994, with the following modification: the heating and cooling rates are set at 10 K/min instead of at 20 K/min and wherein the sample size ranges between 5 - 10 mg. The film is dried at 100 °C for 1 hour immediately before measuring the *T*_{g}*.*

The dry film further typically has a strain at maximum load in the range of 50 - 500 % and/or a stress at maximum load of 0.5 - 10 MPa (measured as the tensile strength (Instron 1405 testing machine, 50 mm/min, 23 °C, 50 % relative humidity) of the films), more preferably a stress at maximum load of 1 - 6 MPa. The dry film further typically has a water vapour transmission rate in the range of 30 - 1000 g/(m²·day) as measured by the "cup method", wherein the film is spanned over a cup with water and the thus covered cup is placed in an environment of 23 °C and 50% relative humidity, and the evaporation (in g water per day per m²) of water into this environment is determined by weighing the cup. The WVTR is normalized to a film thickness of 300 µm.

### Examples

The following examples are intended to illustrate the invention.

### Example 1 - Dispersion formation

Four batches of low molecular weight polylactic acid homopolymers (PLA1 - 4) were prepared by polycondensation of racemic lactic acid (DL-lactic acid) according to known methods. 1 kg of DL-lactic acid and 0.45 g of stannous octoate were weighed into a bench scale Juchheim reactor. Nitrogen flow was inserted into the reactor, and the temperature was gradually increased to 180 °C while distilling water out of the reaction mixture. After the water formation stopped, the reaction pressure was reduced and the reaction was carried on overnight. Two batches of polylactic acid copolymers of lactide and PEG (PLA 5 - 6) were prepared by ring opening polymerization of racemic lactide (DL-lactide). DL-lactide and PEG5000 were dried at vacuum overnight. Toluene was dried with molecular sieves. For PLA6, 50 g of DL-lactide, 15 g of PEG5000 and 14 mg of stannous octoate in 1.4 g of toluene were added into a glass reactor. Polymerization was conducted at 160 °C for 4 h under N₂ atmosphere. The characteristics of these polymers are given in Table 1, as well as for the reference polymer Ingeo 4060D (NatureWorks).

In comparison with the control Ingeo, lowering of the *M*ₙ as well is introducing comonomers leads to a desirable lowering of the *T*_{g}*.*

**Table 1: polymer characteristics**

| Entry | Structure | *M*ₙ (g/mol) ^{[a]} | *T*_{g} (°C) ^{[b]} |
|---|---|---|---|
| PLA1 | PLA homopolymer | 11100 | 38 |
| PLA2 | PLA homopolymer | 9000 | 38 |
| PLA3 | PLA homopolymer | 9500 | 37 |
| PLA4 | PLA homopolymer | 7700 | - |
| PLA5 | copolymer of PLA + 9 wt% PEG5000 | 41000 | 30 |
| PLA6 | copolymer of PLA + 23 wt% PEG5000 | - | -6 |
| Ingeo | PLA homopolymer | 50600 | 58 |

| | | | |
|---|---|---|---|
| [a] Determined by SEC in DMSO, except for PLA5, which was determined in THF. [b] Measured according to DIN 53765, version March 1994, with the following modification: the heating and cooling rates are set at 10 K/min instead of at 20 K/min and wherein the sample size ranges between 5 - 10 mg. | | | |

Dispersions were prepared with a thermo-mechanical method as described in WO 98/029477 entitled "Process for the preparation of polymer dispersions" (applicant: VTT). The PLA polymer, plasticizer (if applicable) and/or additional polymer (if applicable) were placed into a glass reactor with a mechanical stirrer. The components were melted at suitable temperature (between 90 °C and 180 °C, see Table 2) until a homogeneous melt was obtained. The temperature of the melt was adjusted to 90 - 120 °C, after which Mowiol 40-88 (polyvinyl alcohol, PVOH) solution (10 wt%) was slowly added under refluxing conditions and constant stirring. The final content of Mowiol was 10 wt% of the combined amount of polymer + plasticizer. At some point during the Mowiol/water addition, a dispersion with aqueous continuous phase and micrometer scale polymeric particles was formed. The solid content of the dispersion was adjusted to 40 wt%. The prepared dispersions D1 - D30 are listed in Table 2, together with their stability, pH and *T*_{g} (of most dispersion, not all have been determined). *T*_{g} values were determined from the melt before addition of water/PVOH, according to a modified version of DIN 53765 (see Table 1, footnote [b]).

Stable dispersion with the low-MW polylactic acid batches PLA1 - 4 were formed with a variety of plasticizers (or even no plasticizer), both small molecule plasticizers and polymeric plasticizers, at various concentrations. D3 and D20 were the sole stable dispersions formed with the high-MW Ingeo. D3 contained only 30 wt% Ingeo, blended with 70 wt% PLA1 which lowered the *M*ₙ to the desired level. D20 was unsuitable for film formation (see example 2). The pH of all the prepared dispersions was generally low, probably due to lactic acid (and/or lactic acid oligomers) present in the dispersion. Glycerol and lauric acid were less preferred as plasticizer, as they did not cause a significant lowering of the *T*_{g}*.* Two distinct *T*_{g} values were observed for D12.

**Table 2: Prepared dispersions**

| Entry | Components ^{[a]} | Stab. ^{[b]} | *T* (°C) ^{[c]} | pH | *T*_{g} (°C) |
|---|---|---|---|---|---|
| D1 | PLA1 | Y | 100 | 2.8 | 38 |
| D2 | PLA1 + 23 % triacetin | Y | 100 | 2.3 | -2 |
| D3 | PLA1/Ingeo (7/3) + 23 % triacetin | Y | 160 | 2.2 | 5 |
| D4 | PLA2 + 15 % triacetin | Y | 90 | 2.26 | 11 |
| D5 | PLA2 + 10 % triacetin | Y | 90 | 2.06 | 18 |
| D6 | PLA2 + 5 % triacetin | Y | 90 | 2.1 | 27 |
| D7 | PLA2 + 23 % PA | Y | 90 | 2.18 | -4 |
| D8 | PLA2 + 10 % PA | Y | 110 | 2.12 | |
| D9 | PLA2 + 23 % acetem | Y | 120 | 2.18 | -7 |
| D10 | PLA2 + 10 % acetem | Y | 120 | 2.16 | 16 |
| D11 | PLA4 + 10 % acetem ^{[d]} | Y | 90 | | 16 |
| D12 | PLA2 + 23 % soft-n-safe | Y | 120 | 2.17 | -5 / 14 |
| D13 | PLA2 + 10 % soft-n-safe | Y | 120 | 2.17 | 15 |
| D14 | PLA4 + 10 % soft-n-safe ^{[d]} | Y | 90 | | 18 |
| D15 | PLA4 + 5 % PA + 5 % acetem ^{[d]} | Y | 90 | | 17 |
| D16 | PLA4 + 5 % PA + 5 % soft-n-safe ^{[d]} | Y | 90 | | 20 |
| D17 | PLA1 + 23 % cremophor | Y | 100 | 2.4 | |
| D18 | PLA2 + 23 % glycerol | Y | 90 | 2.5 | 34 |
| D19 | PLA2 + 23 % lauric acid | Y ^{[e]} | 90 | 2.23 | 30 |
| D20 | Ingeo + 23 % cremophor | Y | 180 | 3.2 | 29 |
| D21 | Ingeo + 23 % Brij O10 | N | 180 | | 29 |
| D22 | Ingeo + 23 % triacetin | N | 180 | | |
| D23 | PLA2 + 23 % PEA | Y | 90 | 2.3 | 13 |
| D24 | Ingeo + 23 % PEG6000 | N | 170 | | 48 |
| D25 | Ingeo + 23 % PEG600 | N | 170 | | 33 |
| D26 | Ingeo + 23 % PPG750 | N | 180 | | 38 |
| D29 | PLA2/EVA89 (7/3) | Y | 160 | 2.06 | 32 |
| D30 | PLA2/EVA80 (7/3) | Y | 160 | 2.07 | 26 |

| | | | | | |
|---|---|---|---|---|---|
| [a] Total polylactic acid content adds up to 100 wt%, plasticizer content is in wt% based on polylactic acid content. PA = propionic acid; PEA = poly(ethylene adipate); EVA = ethylene-vinyl acetate copolymer (80 % or 89 % vinyl acetate monomers). [b] Stability of the dispersion: Y = Yes, stable; N = No, not stable. [c] Temperature of homogeneous melt during preparation of the dispersion. [d] Ultra-Turrax post-treatment for 15 min at 90 °C. [e] The composition was a paste at 40 % total solid, but after dilution to 26 % total solid a stable dispersion was formed. | | | | | |

### Example 2 - Film formation

Dispersions D2 - D16, D20, D23, D29 and D30 obtained in example 1 were subjected to film formation experiments, together with control dispersions C1 and C2. Films were drawn from the dispersions (40 wt% solids content) with a 500 µm bar coater. The films were dried at RT overnight and the quality of the film was checked by optical microscopy (40 × enlargement). Furthermore, minimum film formation temperature (MFFT) measurements were performed and the tensile strength (Instron 1405 testing machine, 50 mm/min, 23 °C, 50 % relative humidity) of the films was determined. The water vapour transmission rate (WVTR) of the films was determined with the "cup method", wherein the film was spanned over a 250 mL cup with containing 100 mL water, sealed hermitically to the rim of the cup with a rubber band and placed in a controlled atmosphere of 23 °C and 50 % relative humidity. The evaporation (in g water per 24 h per m²) of water was determined by weighing the cup after 5 and 9 days. The film thickness was measured at ten points in the film and averaged, and the WVTR was normalized to a film thickness of 300 µm. The results are displayed in Table 3, using the same numbers as for the dispersions in Table 2.

Notably, the only stable dispersion of Ingeo did not form a film at room temperature, rendering high-MW polylactic acid unsuitable in cheese coating compositions. Optical microscopy revealed that the particle size of dispersion D20 was far greater than for the other dispersions subjected to film formation, which is expected to be the reason behind the failed film formation experiment.

MFFT values for D11 and D14 were excellent, amounting to 7 - 8 °C and 10 - 12 °C, which implies that films are formed even at temperatures far below room temperature. For D15 and D16, the MFFT amounted to 12 °C and 13 °C respectively, which - albeit slightly higher - is still excellent for film forming in an industrial cheese coating process. The mechanical properties (maximal stress and strain values) and WVTR are similar to those of conventional polyvinyl acetate-based cheese coatings, indicating that the polylactic acid-based cheese coatings according to the present invention are an excellent renewable and environmentally friendly alternative to petrochemical-based coatings such as polyvinyl acetate coatings. Notably, the polylactic acid-based films had comparable characteristics to PVA-based control films C1 - C2 (see Table 3), which were prepared according to the same procedure as described in Examples 1 and 2.

**Table 3: Preparedfilms**

| Entry | Components | Film ^{[a]} | stress ^{[b]} | strain ^{[c]} | WVTR ^{[d]} |
|---|---|---|---|---|---|
| D2 | PLA1 + 23 % triacetin | Y | 1.2 | 170 | 124 / 128 |
| D3 | PLA1/Ingeo (7/3) + 15 % triacetin | Y | 2.4 | 170 | 78 / 76 |
| D4 | PLA2 + 15 % triacetin | Y | 1.9 | 360 | 62 / 54 |
| D5 | PLA2 + 10 % triacetin | Y | 1.8 | 420 | 50 / 45 |
| D6 | PLA2 + 5 % triacetin | Y | 4.6 | 240 | |
| D7 | PLA2 + 23 % PA | Y | 1.8 | 290 | |
| D8 | PLA2 + 10 % PA | Y | 4 | 550 | 62 / 54 |
| D9 | PLA2 + 23 % acetem | Y | 1.7 | 370 | 96 / 89 |
| D10 | PLA2 + 10 % acetem | Y | | | 75 / 75 |
| D11 | PLA4 + 10 % acetem | Y | | | |
| D12 | PLA2 + 23 % soft-n-safe | Y | 1.6 | 350 | 95 / 93 |
| D13 | PLA2 + 10 % soft-n-safe | Y | 3.2 | 370 | 50 / 48 |
| D14 | PLA4 + 10 % soft-n-safe | Y | | | |
| D15 | PLA4 + 5 % PA + 5 % acetem | Y | | | |
| D16 | PLA4 + 5 % PA + 5 % soft-n-safe | Y | | | |
| D20 | Ingeo + 23 % cremophor | N | | | |
| D23 | PLA2 + 23 % PEA | Y | 2 | 1.8 | 87 / 79 |
| D29 | PLA2/EVA89 (7/3) | Y | 4.9 | 330 | |
| D30 | PLA2/EVA80 (7/3) | Y | 4.6 | 450 | 60 / 53 |
| C1 | PVA-DBM | Y | 4.7 | 310 | 179 / 179 |
| C2 | EVA | Y | 1.3 | 330 | 189 / 196 |

| | | | | | |
|---|---|---|---|---|---|
| [a] Film formation at room temperature: Y = Yes; N = No. [b] Stress at max. load (MPa). [c] Strain at max. load (%) [d] Water vapour transmission rate (g/24 h.m² based on film of 300 µm thick). Values at day 5 (left) and day 9 (right) are given. | | | | | |

### Example 3 - Polylactic acid degradation

The hydrolytic degradation of polylactic acid within the dispersions of Example 1 was tested. From fresh dispersions, 2 - 4 days after their preparation, a film was cast and stored at room temperature. The dispersion was stored at 5 °C, and 2 - 4 weeks after preparation of the dispersion, the *M*ₙ of the polymer in the aged dispersion was measured as well as the *M*ₙ of the polymer in the fresh dispersion (i.e. of the film) by SEC. A general trend was clear that the *M*ₙ was slightly reduced in the film / fresh dispersion, compared to the aged dispersion, indicating that within the film at room temperature slightly more degradation of polylactic acid occurs then in the dispersion at 5 °C. Also, in all films, the *M*ₙ was slightly reduced (typically a 10 - 20 % reduction was observed) compared to the *M*ₙ of the original polymer, indicating that indeed degradation of the polylactic acid occurs slowly over time.

### Example 4 - Cheese coating studies

Cheese coating studies were performed with five dispersions. The dispersion were prepared in the same way as described in Example 1, but at a larger scale (i.e. on 1 kg scale vs 100 mL scale in Example 1).
- Dispersion 1 contained a co-polymer of DL-lactic acid with 10 mol% adipic acid and 10 mol% 1,2-propanediol, prepared in the same way as homopolymers PLA1 - 4 (Example 1), with the addition of the comonomers. This co-polymer had an *M*ₙ of 7300 g/mol and a *T*_{g} of 8 °C. Dispersion 1 had a pH of 2.15 and a total solid content of 48 wt%.
- Dispersion 2 contained a co-polymer of DL-lactic acid with 5 mol% sebacic acid and 5 mol% 1,2-propanediol, prepared in the same way as homopolymers PLA1 - 4 (Example 1), with the addition of the comonomers. This co-polymer had an *M*ₙ of 6500 g/mol and a *T*_{g} of 11 °C. Dispersion 2 had a pH of 2.14 and a total solid content of 48 wt%.
- Dispersion 3 contained a homopolymer of DL-lactic acid, prepared in the same way as homopolymers PLA1 - 4 (Example 1) and 10 wt% acetem, based on the weight of the polylactic acid. The polymer had an *M*ₙ of 5600 g/mol, an *M*_{w} of 9000 g/mol and the melt had a *T*_{g} of 7 °C. Dispersion 3 had a pH of 2.12 and a total solid content of 40 wt%.
- Dispersion 4 contained a homopolymer of DL-lactic acid, prepared in the same way as homopolymers PLA1 - 4 (Example 1), together with 5 wt% acetem and 5 wt% propionic acid, both based on the weight of the polylactic acid. The polymer had an *M*ₙ of 5600 g/mol, an *M*_{w} of 9000 g/mol and the melt had a *T*_{g} of 11 °C. Dispersion 4 had a pH of 2.18 and a total solid content of 40 wt%.
- Dispersion 5 contained a homopolymer of DL-lactic acid, prepared in the same way as homopolymers PLA1 - 4 (Example 1). The polymer had an *M*ₙ of 8200 g/mol, an *M*_{w} of 13700 g/mol and a *T*_{g} of 40 °C. Dispersion 5 had a pH of 2.1 and a total solid content of 45 wt%.

Cheese coating compositions were prepared from dispersions 1 - 5, by addition of NaOH (5 N, aq), annatto (Annatto WS ex CSK Food Enrichment BV, 1.2 ml) and natamycin (1000 ppm) according to Table 4. pH, Brookfield viscosity (determined according to ISO 2555), *T*_{g} (determined according to Table 1, footnote [b]) and total solid content of the cheese coating compositions are also given in Table 4. Dispersion 5 was used as a 30/70 (w/w) mixture with a conventional poly(vinyl acetate-co-dibutylmaleate) based CeskaCoat® WL 01.1000.30 ex CSK Food Enrichment BV- A 5 kg Dutch cheese, flat cylindrical model, having a fat content in the solid matter content of 50%, is taken out of the brine bath and coated as follows: Approximately 3 to 4 days after production, within a few hours after coming out of the brine, the cheeses were placed on wooden shelves, and by manual application (using a sponge) received a thin coating layer on the top half of the cheese as well as on the sides. The amount of coating which is applied in one run ranges (on average) between 5 and 10 g (on total weight of the coating composition). The coating is allowed to dry for between one to three days, the cheeses are turned on the shelves and the procedure is repeated until the cheeses reach an age of 29 days after production. More precisely, the cheese was turned and subsequently subjected to half-side coating at day 4, 7, 10, 13, 15, 17, 19, 22 and 25 after production. The storage conditions are controlled at a temperature of 13 + 1 °C and at a relative humidity of 88 + 3 %.

The performance of the coatings was assessed and the results thereof are summarized in Table 5 and Figure 1, as well as those of a control cheese coating being CeskaCoat WL 01.1000.30. The extent the coating stuck to the shelf during storage ("Tack"), the gloss of the coating and the extent of damage of the coatings that occurred during storage was assessed. Furthermore, a drop test was performed involving dropping the cheese (the base of the cheese cylinder making a 90 degree angle to the ground) on the ground from a height of 1 meter and the type of damage that occurred is also presented in table 5. Figure 1 depicts the dehydration of the cheeses during storage. Some dehydration always occurs, but this is preferably kept at a minimum. The weight of the cheese at day 4 was used as starting point, and the weight loss of the coated cheeses during storage is given in Figure 1. All coatings performed satisfactory, in that they performed equally well or sometimes even better compared to the control coating in at least one of the tested aspects.

As a final remark, these formulated dispersions which were prepared on large scale were preferably stirred up prior to application on cheese in case some sedimentation had occurred. It is likely that the stability can be improved by increasing the amount of shear.

**Table 4: Formulation and characteristics of the cheese coating compositions**

| Dispersion | NaOH | pH | Viscosity | TS | *T*_{g} |
|---|---|---|---|---|---|
| (weight) | (ml) | | (mPa.s) | (wt%) | (°C) |
| 1 (594 g) | 45 | 4.50 | 2100 | 45.5 | 8 |
| 2 (587 g) | 50 | 4.44 | 1800 | 15.4 | 11 |
| 3 (589 g) | 65 | 4.37 | 200 | 39.1 | 6 |
| 4 (580 g) | 60 | 4.29 | 300 | 40.6 | 7 |
| 5 (589 g) | 32 | 4.59 | 1100 | 40.3 | 15 |

**Table 5: Results of the cheese coating studies**

| Dispersion | Tack | Gloss | Damage | Drop test |
|---|---|---|---|---|
| 1 | some | good | some | no cracks |
| 2 | some | good | some | some cracks |
| 3 | no | reasonable | no | small lines |
| 4 | no | reasonable | no | small lines |
| 5 | no | bad | no | some cracks |
| Control | slight | good | some | some cracks |

## Claims

1. A method for coating a cheese, comprising applying an aqueous coating composition to the surface of a cheese, wherein the coating composition comprises at least 5 wt% polylactic acid dispersed in an aqueous phase, and optionally a plasticizer, wherein the polylactic acid has a number-averaged molecular weight (*M*ₙ) of at most 50000 g/mol, wherein the *M*ₙ is determined using the size exclusion chromatography method defined in the description.

2. The method according to claim 1, wherein the polylactic acid is a polymer comprising both D-lactic acid and L-lactic acid monomeric units in a D-lactic acid to L-lactic acid molar ratio in the range of 80:20 - 20:80, preferably 70:30 - 30:70, more preferably 55:45 - 45:55.

3. The method according to claim 1 or 2, wherein the coating composition comprises a plasticizer selected from small molecule plasticizers and polymeric plasticizers, preferably a small molecule plasticizer selected from lactic esters, glycerol esters, citrate esters and organic acids.

4. The method according to any of the preceding claims, wherein the coating composition comprises 0.1 - 15 wt% plasticizer, relative to the weight of polylactic acid.

5. The method according to any of the preceding claims, wherein the coating composition comprises 30 - 50 wt%, preferably 35 - 45 wt%, of the combined content of polylactic acid and plasticizer, relative to the total weight of the coating composition.

6. The method according to any of the preceding claims, wherein the polylactic acid has an *M*ₙ of 1000 - 45000 g/mol, preferably 5000 - 25000 g/mol.

7. The method according to any of the preceding claims, wherein the polylactic acid has a weight-averaged molecular weight (*M*_{w}) of at most 100000 g/mol, preferably 1000 - 75000 g/mol, most preferably 3000 - 40000 g/mol.

8. The method according to any of the preceding claims, wherein the coating composition does not comprise an added source of lactic acid bacteria.

9. The method according to any of the preceding claims, wherein the coating composition further comprises protective colloids, preferably wherein the protective colloids comprise a water-soluble polymer, preferably a water-soluble polymer of vinyl alcohol, vinyl pyrrolidone, ethylene glycol, or propylene glycol.

10. The method according to any of the preceding claims, wherein the coating composition further comprises an emulsifier, preferably a surfactant.

11. The method according to any of the preceding claims, wherein the coating composition further comprises one or more colorants, preferably selected from carotene and annatto.

12. The method according to any of the preceding claims, wherein the coating composition further comprises a preservatives, preferably selected from the group consisting of natamycin, acetic acid and salts thereof and propionic acid and salts thereof.

13. A coated cheese obtainable by the method according to any of the preceding claims.

14. A food coating composition, comprising at least 5 wt% polylactic acid dispersed in an aqueous phase, protective colloids and optionally a plasticizer, which further comprises a colorant, and which does not contain any filler, and which does not contain polyester urethane having an *M*ₙ of 10⁵, wherein the polylactic acid has a number-averaged molecular weight (*M*ₙ) of at most 50000 g/mol, wherein the *Mₙ* is determined using the size exclusion chromatography method defined in the description.

15. Use of a coating composition comprising at least 5 wt% polylactic acid dispersed in an aqueous phase, protective colloids and optionally a plasticizer, wherein the polylactic acid has a number-averaged molecular weight (*M*ₙ) of at most 50000 g/mol for the coating of cheese, wherein the *M*ₙ is determined using the size exclusion chromatography method defined in the description.

## Patentansprüche

1. Verfahren zum Überziehen eines Käses, mit Aufbringung einer wasserhaltigen Überzugszusammensetzung auf die Oberfläche eines Käses, wobei die Überzugszusammensetzung mindestens 5 Gew.-% Polymilchsäure umfasst, die in einer wasserhaltigen Phase dispergiert wird, und auf Wunsch einen Weichmacher, wobei die Polymilchsäure ein Zahlenmittel des Molekulargewichts (Mₙ) von maximal 50000 g/mol hat, wobei das Mₙ unter Verwendung des Größenausschluss-Chromatographieverfahrens bestimmt wird, das in der Beschreibung definiert ist.

2. Verfahren nach Anspruch 1, wobei die Polymilchsäure ein Polymer mit sowohl D-Milchsäure- als auch L-Milchsäure-Monomereinheiten ist, mit einem Molverhältnis D-Milchsäure zu L-Milchsäure im Bereich von 80:20 - 20:80, vorzugsweise 70:30 - 30:70, besonders bevorzugt 55:45 - 45:55.

3. Verfahren nach Anspruch 1 oder 2, wobei die Überzugszusammensetzung einen Weichmacher umfasst, ausgewählt aus Kleinmolekül-Weichmachern und Polymerweichmachern, vorzugsweise einen Kleinmolekül-Weichmacher ausgewählt aus Milchsäureestern, Glycerolestern, Citratestern und organischen Säuren.

4. Verfahren nach einem der vorhergehenden Ansprüche, wobei die Überzugszusammensetzung 0,1 - 15 Gew.-% Weichmacher umfasst, im Verhältnis zum Polymilchsäurengewicht.

5. Verfahren nach einem der vorhergehenden Ansprüche, wobei die Überzugszusammensetzung 30 - 50 Gew.-%, vorzugsweise 35 - 45 Gew.-%, des kombinierten Inhalts von Polymilchsäure und Weichmacher umfasst, im Verhältnis zum Gesamtgewicht der Überzugszusammensetzung.

6. Verfahren nach einem der vorhergehenden Ansprüche, wobei die Polymilchsäure ein Mₙ von 1000 - 45000 g/mol hat, vorzugsweise 5000 - 25000 g/mol.

7. Verfahren nach einem der vorhergehenden Ansprüche, wobei die Polymilchsäure ein gewichtsgemitteltes Molekulargewicht (M_{w}) von maximal 100000 g/mol hat, vorzugsweise 1000 - 75000 g/mol, am meisten bevorzugt 3000 - 40000 g/mol.

8. Verfahren nach einem der vorhergehenden Ansprüche, wobei die Überzugszusammensetzung keine hinzugefügte Quelle von Milchsäurebakterien umfasst.

9. Verfahren nach einem der vorhergehenden Ansprüche, wobei die Überzugszusammensetzung des Weiteren Schutzkolloide umfasst, wobei die Schutzkolloide vorzugsweise ein wasserlösliches Polymer umfassen, vorzugsweise ein wasserlösliches Polymer von Vinylalkohol, Vinylpyrrolidon, Äthylenglykol oder Propylenglykol.

10. Verfahren nach einem der vorhergehenden Ansprüche, wobei die Überzugszusammensetzung des Weiteren einen Emulgator umfasst, vorzugsweise ein Tensid.

11. Verfahren nach einem der vorhergehenden Ansprüche, wobei die Überzugszusammensetzung des Weiteren einen oder mehr Farbstoffe umfasst, vorzugsweise Karotin oder Annatto.

12. Verfahren nach einem der vorhergehenden Ansprüche, wobei die Überzugszusammensetzung des Weiteren einen Konservierungsstoff umfasst, vorzugsweise ausgewählt aus der Gruppe bestehend aus Natamycin, Essigsäure und Salzen davon sowie Propionsäure und Salzen davon.

13. Überzogener Käse, der durch das Verfahren nach einem der vorhergehenden Ansprüche erhaltbar ist.

14. Überzugszusammensetzung für Lebensmittel, mit mindestens 5 Gew.-% Polymilchsäure, die in einer wasserhaltigen Phase dispergiert wird, Schutzkolloiden und auf Wunsch einem Weichmacher, die des Weiteren einen Farbstoff umfasst, und die kein Füllmittel enthält, und die nicht Polyesterurethan mit einem Mₙ von 10⁵ enthält, wobei die Polymilchsäure ein Zahlenmittel des Molekulargewichts (Mₙ) von maximal 50000g/mol hat, wobei das Mₙ unter Verwendung des Größenausschluss-Chromatographieverfahrens bestimmt wird, das in der Beschreibung definiert ist.

15. Verwendung einer Überzugszusammensetzung mit mindestens 5 Gew.- % Polymilchsäure, die in einer wasserhaltigen Phase dispergiert wird, Schutzkolloiden und auf Wunsch einem Weichmacher, wobei die Polymilchsäure ein Zahlenmittel des Molekulargewichts (Mₙ) von maximal 50000 g/mol für die Käseüberzugsschicht hat, wobei das Mₙ unter Verwendung des Größenausschluss-Chromatographieverfahrens bestimmt wird, das in der Beschreibung definiert ist.

## Revendications

1. Procédé d'enrobage de fromage, comprenant l'application d'une composition d'enrobage aqueuse sur la surface d'un fromage, où la composition d'enrobage comprend au moins 5 % en poids d'acide polylactique dispersé dans une phase aqueuse, et facultativement un plastifiant, où l'acide polylactique a une masse moléculaire moyenne en nombre (*Mₙ*) d'au plus 50000 g/mol, où la *Mₙ* est déterminée en utilisant le procédé de chromatographie d'exclusion de taille défini dans la description.

2. Procédé selon la revendication 1, où l'acide polylactique est un polymère comprenant à la fois des unités monomères d'acide D-lactique et d'acide L-lactique dans un rapport molaire de l'acide D-lactique à l'acide L-lactique de l'ordre de 80:20 - 20:80, de préférence 70:30 - 30:70, plus préférablement 55:45 - 45:55.

3. Procédé selon la revendication 1 ou 2, où la composition d'enrobage comprend un plastifiant sélectionné parmi les plastifiants à petites molécules et les plastifiants polymériques, de préférence un plastifiant à petites molécules sélectionné parmi les esters lactiques, les esters de glycérol, les esters de citrate et les acides organiques.

4. Procédé selon l'une quelconque des revendications précédentes, où la composition d'enrobage comprend 0,1 - 15 % en poids de plastifiant, par rapport au poids d'acide polylactique.

5. Procédé selon l'une quelconque des revendications précédentes, où la composition d'enrobage comprend 30 - 50 % en poids, de préférence 35 - 45 % en poids, de la teneur combinée d'acide polylactique et plastifiant, par rapport au poids total de la composition d'enrobage.

6. Procédé selon l'une quelconque des revendications précédentes, où l'acide polylactique a une *Mₙ* de 1000 - 45000 g/mol, de préférence 5000 - 25000 g/mol.

7. Procédé selon l'une quelconque des revendications précédentes, où l'acide polylactique a une masse moléculaire moyenne en poids (*M_{w}*) d'au plus 100000 g/mol, de préférence 1000 - 75000 g/mol, plus préférablement 3000 - 40000 g/mol.

8. Procédé selon l'une quelconque des revendications précédentes, où la composition d'enrobage ne comprend pas une source ajoutée de bactéries lactiques.

9. Procédé selon l'une quelconque des revendications précédentes, où la composition d'enrobage comprend en outre des colloïdes protecteurs, de préférence où les colloïdes protecteurs comprennent un polymère hydrosoluble, de préférence un polymère hydrosoluble d'alcool vinylique, de vinylpyrrolidone, d'éthylène glycol, ou de propylène glycol.

10. Procédé selon l'une quelconque des revendications précédentes, où la composition d'enrobage comprend en outre un émulsifiant, de préférence un tensioactif.

11. Procédé selon l'une quelconque des revendications précédentes, où la composition d'enrobage comprend en outre un ou plusieurs colorants, de préférence sélectionnés parmi le carotène et le grain de roucou.

12. Procédé selon l'une quelconque des revendications précédentes, où la composition d'enrobage comprend en outre un agent de conservation, de préférence sélectionné du groupe constitué par la natamycine, l'acide acétique et ses sels et l'acide propionique et ses sels.

13. Fromage enrobé pouvant être obtenu par le procédé selon l'une quelconque des revendications précédentes.

14. Composition d'enrobage alimentaire, comprenant au moins 5 % en poids d'acide polylactique dispersé dans une phase aqueuse, des colloïdes protecteurs et facultativement un plastifiant, qui comprend en outre un colorant, et qui ne contient pas d'agents de remplissage, et qui ne contient pas de polyester uréthane ayant une *Mₙ* de 10⁵, où l'acide polylactique a une masse moléculaire moyenne en nombre (*Mₙ*) d'au plus 50000 g/mol, où la *Mₙ* est déterminée en utilisant le procédé de chromatographie d'exclusion de taille défini dans la description.

15. Utilisation d'une composition d'enrobage comprenant au moins 5 % en poids d'acide polylactique dispersé dans une phase aqueuse, des colloïdes protecteurs et facultativement un plastifiant, où l'acide polylactique a une masse moléculaire moyenne en nombre (*Mₙ*) d'au plus 50000 g/mol pour l'enrobage de fromage, où la *Mₙ* est déterminée en utilisant le procédé de chromatographie d'exclusion de taille défini dans la description.
